# EUROPÄISCHE PATENTSCHRIFT

(11) **EP 0 623 414 B1**
(45) Veröffentlichungstag und Bekanntmachung des Hinweises auf die Patenterteilung: **25.07.2001**
(21) Anmeldenummer: 94106723.3
(22) Anmeldetag: 29.04.1994
(51) Int. Cl.: B23K 11/31

(54) **Pinolenelement für eine Schweisszange sowie Punktschweisszange und Stromzuführung für diese Schweisszange**
Welding gun arm, welding gun and electric current supply of this welding gun
Bras d'un pince à sonder, pince à sonder ainsi que l'alimentation électrique de cette pince

(30) Priorität: 03.05.1993 DE 4314421; 04.06.1993 DE 4318585
(43) Veröffentlichungstag der Anmeldung: 09.11.1994
(73) Patentinhaber: BAVARIA-TECH, WERNER SCHLATTL, D-94034 Passau (DE)
(72) Erfinder: Schlattl, Werner, D-94161 Ruderting (DE)
(74) Vertreter: Graf, Helmut, Dipl.-Ing.

(56) Entgegenhaltungen:
- DE-A- 3 300 360
- DE-A- 4 006 448
- US-A- 4 114 017

## Beschreibung

Die Erfindung bezieht sich auf eine Punktschweißzange gemäß Oberbegriff Patentanspruch 1 (siehe z. B. US-A-4 114 017).

Punktschweißzangen werden in der Industrie und vor allem in der Fahrzeugindustrie, im Karosseriebau oder dergl. umfangreich eingesetzt, insbesondere auch als Schweißzangen für Schweiß-Roboter.

Die Schweißeleektroden solcher Schweißzangen sind an sogenannten Pinolen vorgesehen, die ihrerseits in der Regel an Pinolenhaltern gehalten sind. Wenigstens eine Pinole ist zum Schließen und Öffnen der Schweißzange relativ zur anderen Pinole bewegbar, und zwar durch ein Antriebselement oder Stellglied. Die Stromzuführung an die Elektroden, die bei geschlossener Schweißzange gegen das in der Regel von Blechen gebildete Schweißgut angepreßt anliegen, erfolgt über die aus elektrisch leitendem Material hergestellten Pinolen sowie Pinolenhalter, und zwar über flexible Stromzuführungen in Form von Leitungen oder Strombändern, die aus Gründen einer möglichst hohen Lebensdauer in Bezug auf mechanische und elektrische Belastungen sowie vor allem auch aus Gründen eines möglichst hohen elektrischen Leitwertes bei möglichst geringem Querschnitt und damit hoher Flexibilität aus Kupfer oder einer Kupferlegierung hergestellt sind. Um einen verlustfreien Anschluß der Stromzuführungen an den Pinolen oder Pinolenhaltern sicherzustellen, bestehen diese bei allen bekannten Punktschweißzangen ebenfalls aus einer Kupferlegierung.

Ein maßgeblicher, die Qualität eines Schweißpunktes beeinflussender Parameter ist die Schweißkraft, d.h. diejenige Kraft, mit der die Schweißelektroden beim Schweißen gegen das Schweißgut angepreßt anliegen. Um über eine möglichst lange Standzeit die geforderte Schweißkraft zu erreichen, wird für die Pinolen und Pinolenhalter eine ausreichende mechanische Festigkeit und Steifigkeit gefordert, die bei Verwendung von Kupfer oder einer Kupferlegierung für die Pinolen und Pinolenhalter zu einem hohen Gewicht für diese Teile führt. Dies bedeutet, daß beim Öffnen und Schließen der Punktschweißzange, aber auch beim Bewegen und Positionieren einer solchen Punktschweißzange relativ große Massen bewegt werden müssen, was relativ lange Taktzeiten bedingt.

Bekannt ist bereits eine Punktschweißzange (US 4 114 017), bei der zur Reduzierung der Masse die die Schweißelektroden mit den Polkappen tragenden Pinolenhalter aus Aluminium oder einer Aluminiumlegierung bestehen und an der Außenfläche mit einem korrosionsbeständigen Nickelüberzug versehen sind. Zum Zuführen des Schweißstromes ist an die beiden gelenkig miteinander verbundenen Pinolenhalter eine Stromzuführung aus Kupfer oder aus einer Kupferlegierung angeschlossen, und zwar über jeweils einen Anschlußklotz, der gegen eine silberbeschichtete Kontaktfläche einen ersten, an dem jeweiligen Pinolenelement gebildeten Kontakbereich anliegt.

Bekannt ist weiterhin (DE 28 32 574), bei einer elektrischen Punktschweißvorrichtung an Elektrodenhaltern oder Pinolen Mittel zum Kühlen des Pinolenelementes vorzusehen, und zwar speziell in Form von Kanälen, die von einem Kühlmedium durchströmt werden, wobei z.B. wenigstens eine Leitung zum Zuführen oder Abführen des Kühlmediums gleichzeitig auch als elektrischer Anschluß für eine Elektrode dienen kann.

Bekannt sind schließlich grundsätzlich auch Tampon-Galvanisierungs-Verfahren (DE 34 07 556 und EP 003 680) zum Herstellen von Beschichtungen aus elektrisch leitendem Mterial, insbesondere aus Metallen.

Aufgabe der Erfindung ist es, eine Punktschweißzange aufzuzeigen, die bei reduzierter Masse für das wenigstens eine Pinolenelement einen verlustfreien elektrischen Anschluß im Bereich der Stromzuführung sicherstellt.

Zur Lösung dieser Aufgabe ist eine Punktschweißzange entsprechend dem Patentanspruch 1 ausgebildet.

Bei der Erfindung besteht wenigstens eine Pinole und/oder wenigstens ein Pinolenhalter aus Aluminium oder einer Aluminiumlegierung, und dabei bevorzugt aus einer Aluminium-Kupfer-Magnesium-Legierung, wobei die wenigstens eine Stromzuführung an die Pinole oder an den Pinolenhalter aus Kupfer oder einer Kupferlegierung, vorzugsweise aus einer Kupfer-Chrom-Zirkonium-Legierung (CuCrZr) gefertigt ist, so daß die Vorteile der Stromzuführung aus diesem Material, nämlich die hohe elektrische und mechanische Lebendauer, die hohe elektrische Leitfähigkeit bei geringem Querschnitt und damit verbunden die mechanische hohe Flexibilität bei geringen elektrischen Verlusten voll erhalten bleiben.

Trotz der unterschiedlichen Materialien wird durch die erfindungsgemäße Ausgestaltung eine Ohm'sche Verbindung zwischen der Stromzuführung und der Pinole oder dem Pinolenhalter in der Weise erreicht, daß an dieser Verbindung bzw. an den dortigen Kontaktbereichen ein extrem niedriger Übergangswiderstand zwischen der Stromzuführung und der Pinole bzw. dem Pinolenhalter besteht, so daß trotz der hohen Schweißströme keine oder im wesentlichen keine elektrischen Verluste auftreten. Durch die erfindungsgemäße Ausbildung der Kontaktbereiche wird weiterhin eine hohe Lebensdauer für diese Bereiche erzielt, innerhalb der auch keine Änderung ihrer elektrischen Charakteristiken eintritt.

Bei der bevorzugten Ausführungsform der Erfindung weist die wenigstens eine Pinole Mittel zum Kühlen auf, die dann den Anschlußpunkt bzw. die dortigen Kontaktbereiche in ihrer Wirkung mit einschließen. Die Mittel zum Kühlen sind vorzugsweise von wenigstens einem von einem Kühlmedium durchströmbaren Kanal in oder an der Pinole oder in oder an dem Pinolenhalter gebildet, wobei in diesem Fall bevorzugt die wenigstens eine Stromzuführung oder ein Kontaktklotz dieser Stromzuführung einen Kühlmittelanschluß bildet.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: in vereinfachter schematischer Darstellung und in Seitenansicht die eine Schweißzange;
- Fig. 2: in vergrößerter perspektivischer Teildarstellung eine der beiden Pinolen der Schweißzange gemäß Fig. 1;
- Fig. 3: im Teilschnitt die Pinole der Fig. 2 im Anschluß-punkt;

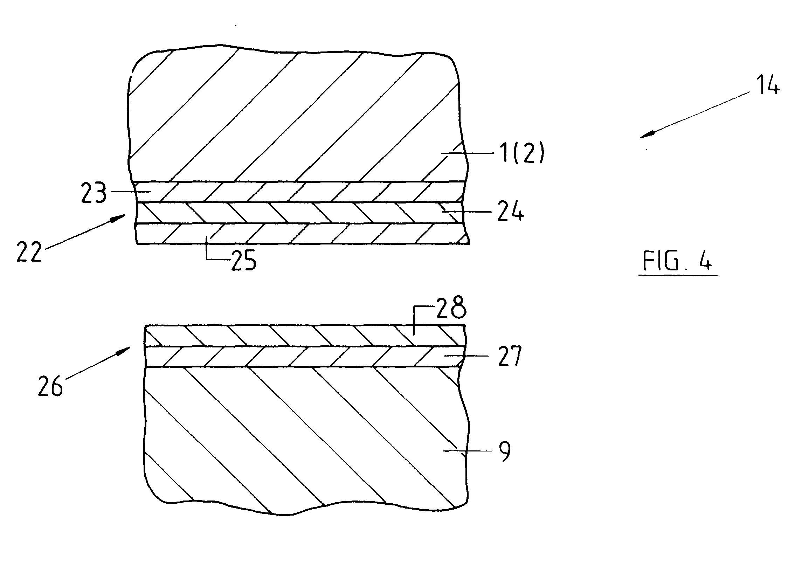

- Fig. 4: in vergrößerter Schnittdarstellung die beiden Kontaktbereichen am Anschlußpunkt;
- Fig. 5: in vergrößerter Schnittdarstellung den Übergang zwischen einer Pinole oder einem Pinolenhalter und einem Elektrodenschaft.

In den Figuren sind 1 und 2 die Pinolen einer Punktschweißzange (beispielsweise Hand- oder Roboter-Schweißzange), wie sie z.B. im Karosserie- oder Fahrzeugbau zum Verschweißen von Blechen verwendet wird.

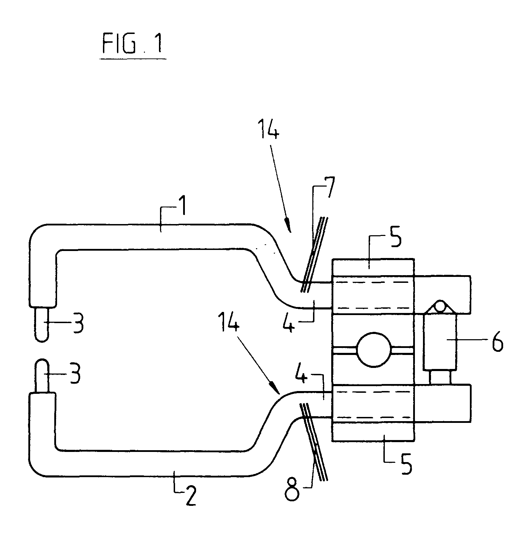

An ihrem einen Ende, d.h. an dem in der Fig. 1 linken Ende, ist jede Pinole 1 bzw. 2 jeweils mit einer Polkappe oder Elektrode 3 versehen. An den anderen Enden bildet jede Pinole 1 bzw. 2 einen Abschnitt 4, mit dem sie an einem, nicht dargestellten Pinolenhalter 5 befestigt ist, der in bekannter Weise so ausgebildet ist, daß zum Öffnen und Schließen der Schweißzange zumindest eine Pinole, beispielsweise die Pinole 1 relativ zu der anderen Pinole, nämlich der Pinole 2 bewegbar oder schwenkbar ist.

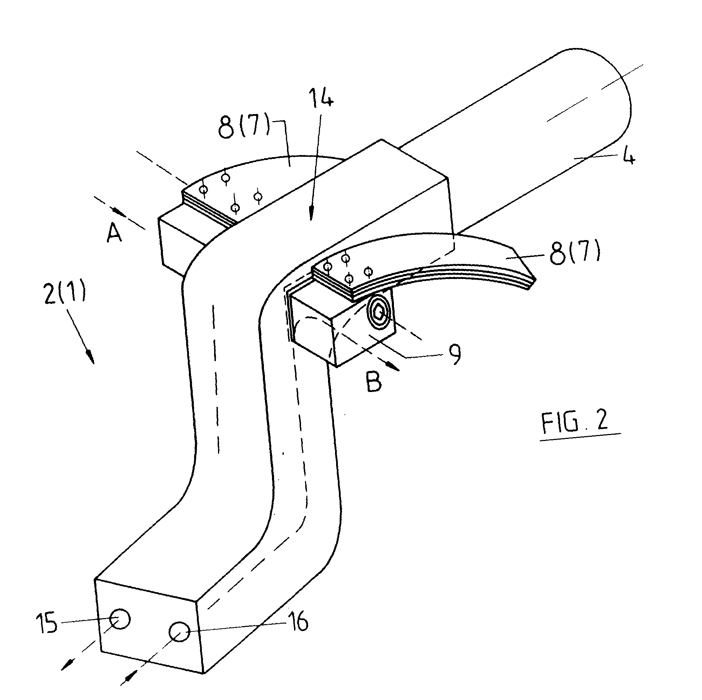

Über flexible Leitungen 7 und 8 sind die Pinolen 1 und 2 jeweils an eine Versorgungsquelle für den Schweißstrom, nämlich an einen Schweißtransformator angeschlossen. Die flexiblen Leitungen 7 und 8, von denen bei der dargestellten Ausführungsform jeweils zwei für jede Pinole 1 bzw. 2 vorgesehen sind, sind jeweils von mehreren lamellenartigen, übereinander angeordneten Kupferbändern gebildet, wie dies der Fig. 2 zu entnehmen ist.

An jeder flexiblen Leitung 7 und 8 bzw. an jedem diese Leitung bildenden Paket von Kupferbändern ist ein Kontaktklotz 9 befestigt, der ebenfalls aus einer Kupferlegierung besteht. Die Verbindung zwischen der jeweiligen Leitung 7 bzw. 8 und dem zugehörigen Kontaktklotz 9 ist in einer Weise hergestellt, die einen optimalen Stromfluß bei minimalstem Übergangswiderstand ermöglicht. Entsprechend der Anzahl der Leitungen 7 bzw. 8 sind an zwei einander gegenüberliegenden Seiten jeder Pinole 1 bzw. 2, und zwar an einem Anschlußpunkt 14 in der Nähe zum jeweiligen Abschnitt 4 und damit zum Pinolenhalter 5 zwei Kontaktklötze 9 gehalten, und zwar mittels eines Gewindebolzens 12, der sich deckende Bohrungen 10 und 11 in der Pinole 1 bzw. 2 und in den Kontaktklötzen 9 durchdringt, und einer zugehörigen Mutter 13.

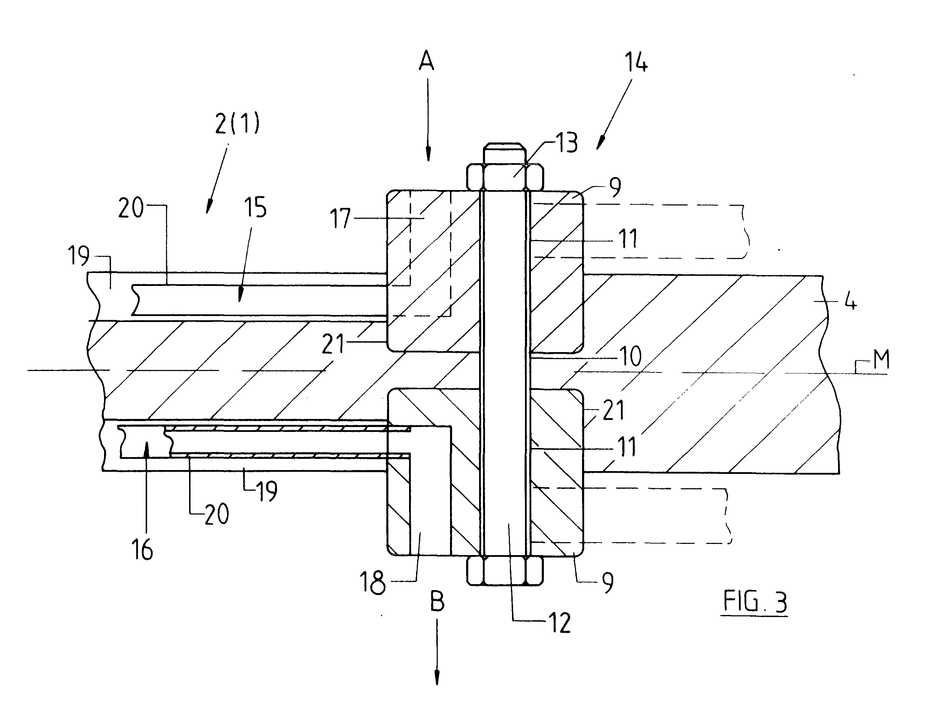

Bei der dargestellten Ausführungsform besitzen die Pinolen 1 und 2 eine in etwa sichelartige Konfiguration. An jeder Pinole 1 und 2 sind die beiden Kontaktklötze 9 beidseitig von einer senkrecht zur Zeichenebene der Fig. 3 verlaufenden Sichel- bzw. Mittelebene M angeordnet sind, in der auch die Längsachsen der Elektroden bzw. Polkappen 3 liegen.

Die Kontaktklötze 9 dienen gleichzeitig zum Zuführen (Pfeil A der Fig. 3) bzw. zum Abführen (Pfeil B) eines Kühlmittels (Kühlwasser). In dem sich vom Anschlußpunkt 14 bis an die jeweilige Elektrode 3 erstreckenden Teil der Pinole 1 bzw. 2 sind in dieser zwei Kanäle 15 und 16 ausgebildet, die von dem Kühlmedium (Kühlwasser) durchströmt werden und im Bereich der Elektrode 3 miteinander verbunden sind. Der Kanal 15 ist mit einem im Kontaktklotz 9 gebildeten Kühlmittelanschluß 17 (Kühlwasservorlauf) und der Kanal 16 mit einem im unteren Kontaktklotz 9 gebildeten Kühlmittelanschluß 18 (Kühlwasserrücklauf) angeschlossen.

Das Zuführen und Abführen des Kühlmittels erfolgt entweder über nicht dargestellte Schläuche, die mit den Anschlüssen 17 und 18 verbunden sind, oder aber die flexiblen Leitungen 7 und 8 sind zugleich auch als Kühlmittelzuführungen oder -abführungen ausgebildet. Die Kanäle 15 und 16 sind beispielsweise dadurch gebildet, daß in jede Pinole 1 bzw. 2 zwei seitliche Nuten 19 eingeformt sind und in diese Nuten ein die Kanäle 15 und 16 sowie auch deren Verbindung im Bereich der Elektrode 3 bildendes Rohrstück eingelegt und befestigt ist, und zwar selbstverständlich derart, daß ein optimaler thermischer Übergang zwischen dem Rohrstück 20 und dem übrigen Material der Pinolen 1 und 2 besteht.

Um ein möglichst geringes Gewicht für die Schweißzange und damit eine verbesserte Handhabung und Erhöhung der Leistung zu erreichen, sind die Pinolen 1 und 2, aber bevorzugt auch die Pinolenhalter 5 aus einer Aluminiumlegierung, bevorzugt aus einer Aluminium, Kupfer und Magnesium als Hauptbestandteile enthaltenden Legierung, vorzugsweise aus AlCuMg 1F39 hergestellt, und zwar beispielsweise durch ein Gießverfahren. Die Kontaktklötze 9 bestehen bevorzugt aus einer Kupferlegierung, und dabei vorzugsweise aus einer Kupferlegierung, deren Hauptbestandteile Kupfer, Chrom und Zirkonium sind.

Um die Verbindung zwischen den Enden des in den Nuten 19 verlegten Rohrstückes 20 und den Kontaktklötzen 9 bzw. den in diesen gebildeten Anschlüssen 17 und 18 zu ermöglichen, ist für jeden Kontaktklotz 9 eine der Quaderform dieses Kontaktklotzes angepaßte rechteckförmige Ausnehmung 21 in der Pinole 1 bzw. 2 vorgesehen, in die der betreffende Kontaktklotz 9 jeweils teilweise eingesetzt ist. Im Bereich des Bodens jeder Ausnehmung 21 erfolgt die Stromübertragung zwischen den Kontaktklötzen 9 und der Pinole 1 bzw. 2. Hierfür ist am Boden jeder Ausnehmung 21 ein erster Kontaktbereich 22 gebildet, der aus insgesamt drei Schichten besteht, und zwar aus einer unmittelbar auf das Material der Pinole 1 bzw. 2 aufgebrachten Schicht 23 aus Nickel oder einer Nickellegierung, aus einer die Schicht 23 überdeckenden Schicht 24, die Gold oder aus einer Gold als Hauptbestandteil enthaltenden Legierung besteht, sowie aus einer die Schicht 24 abdeckenden Schicht 25, die aus Silber oder aus einer Silber als Hauptbestandteil enthaltenden Legierung besteht. Dem Kontaktbereich 22 ist an der dem Boden der Ausnehmung 21 zugewandten Seite jedes Kontaktklotzes 9 ein Kontaktbereich 26 zugeordnet, der zweischichtig ausgebildet ist, nämlich mit der unmittelbar auf das Material des jeweiligen Kontaktklotzes 9 aufgebrachten Schicht 27, die aus Gold oder aus einer Gold als Hauptbestandteil enthaltenden Legierung besteht, und mit der Schicht 28, die aus Silber oder aus einer Silber als Hauptbestandteil enthaltenden Legierung besteht.

Durch den beschriebenen Aufbau der Kontaktbereiche 22 und 26 ergibt sich der erforderliche, optimale Stromübergang, wobei gleichzeitig durch die Kühlung auch der Kontaktklötze 9 und damit der Kontaktbereiche 22 und 26 durch thermische Einflüsse bedingte Veränderungen in den Schichten 23 - 25 bzw. 27 und 28 vermieden werden.

Die Schichten 23 - 25, 27 und 28 sind vorzugsweise jeweils mit Hilfe eines Tampon-Galvanisierverfahrens hergestellt. Dies gilt insbesondere für die Schichten 23 - 25, die am Boden der Ausnehmung 21 vorgesehen sind. Durch das vorgenannte Verfahren lassen sich die letztgenannten Schichten auch in der Ausnehmung 21 derart erzeugen, daß der entsprechende Kontaktbereich 22 die gesamte Bodenfläche der Ausnehmung 21 einnimmt, so daß insbesondere auch in den Ecken sowie am Rand des Bodens der Kontaktbereich 22 vorhanden ist und somit eine große Fläche für diesen Kontaktbereich erzielt wird.

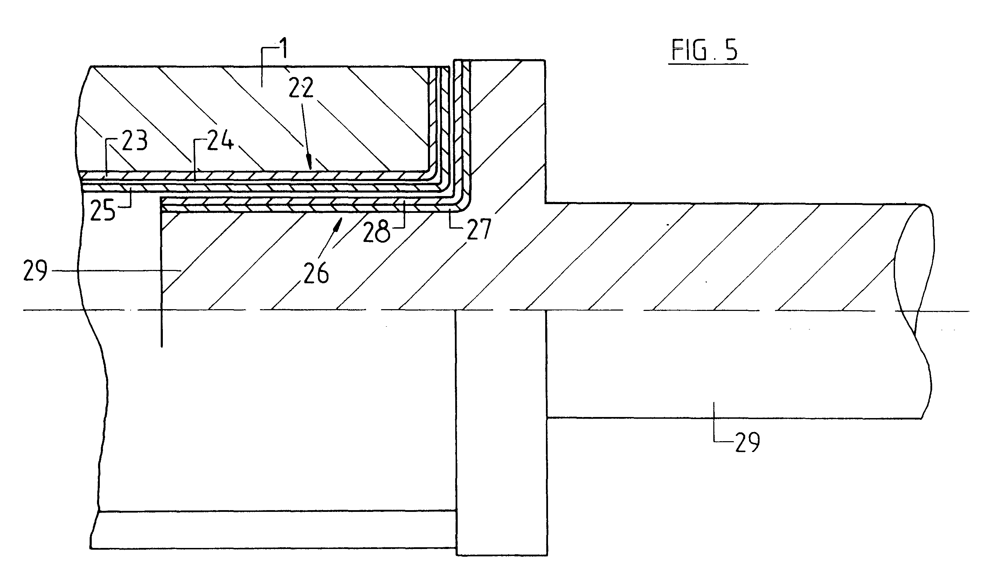

Fig. 5 zeigt als weitere Möglichkeit den Anschlußbereich zwischen der Pinole 1 aus der Aluminiumlegierung und dem aus der Kupferlegierung bestehenden Schaft 29 einer ansonsten nicht dargestellten Elektrode oder eines ansonsten nicht dargestellten Elektrodenhalters. Dieser Schaft bildet bei dieser Ausführungsform die Stromzuführung an den Arbeitsbereich der Elektrode. Am Übergang bzw. Anschlußpunkt 14' zwischen der Pinole 1 und dem Schaft 29 sind die von den Schichten 23 - 25 und 27, 28 gebildeten Kontaktbereiche 22 bzw. 26 vorgesehen, und zwar der Kontaktbereich 22 wiederum an der Pinole 1 und der Kontaktbereich 26 am Schaft 29.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird. So ist es bei bestimmten Alu-Legierungen für das Pinolenelement möglich, auf die Goldschicht beim ersten Kontaktbereich zu verzichten.

### Bezugszeichenliste

- 1, 2: Pinole
- 3: Elektrode
- 4: Abschnitt
- 5: Pinolenhalter
- 6: Betätigungselement
- 7, 8: Leitung
- 9: Kontaktklotz
- 10, 11: Bohrung
- 12: Gewindebolzen
- 13: Mutter
- 14: Anschlußpunkt
- 15, 16: Kanal
- 17, 18: Kühlmittelanschluß
- 19: Nut
- 20: Rohrstück
- 21: Ausnehmung
- 22: Kontaktbereich
- 23 - 25: Schicht
- 26: Kontaktbereich
- 27, 28: Schicht

## Patentansprüche

1. Punktschweißzange mit wenigstens zwei Elektroden (3), von denen zumindest eine erste an einem Pinolenelement (1, 2, 5) vorgesehen ist und mit diesem Pinolenelement (1, 2, 5) relativ zu einer zweiten Elektrode (3) bewegbar ist, mit wenigstens einer Stromzuführung (7, 8), die aus Kupfer oder einer Kupferlegierung gefertigt und an einem Anschlußpunkt (14) elektrisch mit dem aus elektrisch leitenden Material bestehenden Pinolenelement verbunden ist, und zwar über eine ohm'sche Verbindung zwischen wenigstens einem ersten, an dem Pinolenelement (1, 2, 5) gebildeten Kontaktbereich und einen gegen den ersten Kontaktbereich anliegenden zweiten Kontaktbereich (26), der an der Stromzuführung (7, 8) gebildet ist, wobei das Pinolenelement (1, 2, 5) zumindest in einem den Anschlußpunkt (14) einschließenden Teilbereich aus Aluminium oder aus einer Aluminiumlegierung besteht, wobei der erste Kontaktbereich (22) von mindestens zwei Lagen oder Schichten (23 - 25) gebildet ist, von denen eine erste Schicht (23) aus Nickel oder einer Nickellegierung auf die Oberfläche des Pinolenelementes aufgebracht ist und von denen wenigstens eine zweite, die Außenfläche des ersten Kontaktbereiches (22) bildende Schicht (25) aus Silber oder aus einer im wesentlichen Silber enthaltenden Legierung besteht, und wobei die Stromzuführung (7, 8) am Anschlußpunkt (14) einen Kontaktklotz (9) bildet, der an einer Fläche den zweiten Kontaktbereich aufweist,
**dadurch gekennzeichnet**, daß der zweite Kontaktbereich (26) aus zwei Schichten (27, 28) besteht, von denen eine erste, unmittelbar auf die Oberfläche der Stromzuführung (7, 8) aufgebrachte Schicht (27) aus Gold oder aus einer im wesentlichen Gold enthaltenden Legierung und eine zweite darüber aufgebrachte Schicht (28) aus Silber oder aus einer im wesentlichen Silber enthaltenden Legierung bestehen.

2. Punktschweißzange nach Anspruch 1, gekennzeichnet durch Mittel (15, 16) zum Kühlen des Pinolenelementes (1, 2, 5) am Anschlußpunkt (14).

3. Punktschweißzange nach Anspruch 3 dadurch gekennzeichnet, daß die Mittel zum Kühlen von wenigstens einem von einem Kühlmedium durchströmbaren Kanal (15, 16) gebildet sind, und daß der Kanal oder wenigstens ein Kühlmediumanschluß (17, 18) auch im Anschlußpunkt (14) bzw. an den Kontaktbereichen (22, 26) zu deren Kühlung vorgesehen sind.

4. Punktschweißzange nach einem der vorhergehenden Ansprüche, dadurch gekennzeichnet, daß der wenigstens eine erste Kontaktbereich (22) von mindestens drei Lagen oder Schichten (23 - 25) gebildet ist, von denen die erste die Schicht (23) aus Nickel oder der Nickellegierung ist und von denen eine auf die erste Schicht aufgebrachte zweite Schicht (24) aus Gold oder aus einer im Wesentlichen Gold enthaltenden Legierung und eine dritte, die Außenfläche des ersten Kontaktbereiches (22) bildende Schicht (25) aus Silber oder aus einer im wesentlichen Silber enthaltenden Legierung bestehen.

5. Punktschweißzange nach einem der vorhergehenden Ansprüche, dadurch gekennzeichnet, daß die Aluminiumlegierung des wenigstens einen Pinolenelementes eine Aluminium-Kupfer-Magnesium-Legierung, vorzugsweise AICuMg 1F39 ist.

6. Punktschweißzange nach einem der vorhergehenden Ansprüche, dadurch gekennzeichnet, daß die Stromzuführung zumindest im Anschlußbereich von einer Kupfer-Chrom-Zirkonium-Legierung (CuCrZr) gebildet ist.

7. Punktschweißzange nach einem der vorhergehenden Ansprüche, dadurch gekennzeichnet, daß für das wenigstens eine Pinolenelement (1, 2, 5) mindestens zwei Stromzuführungen (7, 8) vorgesehen sind, die mit ihren zweiten Kontaktbereichen (26) aneinander gegenüberliegenden Seiten des Pinolenelementes (1, 2, 5) gegen dortige erste Kontaktbereiche (22) angepreßt anliegen.

8. Punktschweißzange nach einem der vorhergehenden Ansprüche, dadurch gekennzeichnet, daß der Kontaktklotz (9) für die Stromzuführung (7, 8) wenigstens einen Kühlmittelanschluß (17, 18) bildet.

9. Punktschweißzange nach einem der vorhergehenden Ansprüche, dadurch gekennzeichnet, daß der Kontaktklotz (9) zumindest teilweise von einer an dem Pinolenelement (1, 2, 5) gebildeten Ausnehmung (21) aufgenommen ist.

10. Punktschweißzange nach einem der vorhergehenden Ansprüche, dadurch gekennzeichnet, daß die Schichten des ersten und/oder zweiten Kontaktbereichs durch Tampon-Galvanisierungs-Verfahren hergestellt sind.

11. Punktschweißzange nach einem der vorhergehenden Ansprüche, dadurch gekennzeichnet, daß das Pinolenelement eine Pinole (1, 2) und/oder ein Pinolenhalter (5) ist.

12. Punktschweißzange nach einem der vorhergehenden Ansprüche, dadurch gekennzeichnet, daß die wenigstens eine Stromzuführung von einem aus Kupfer oder einer Kupferlegierung bestehenden Element (29), beispielsweise von einer Elektrode, einem Elektrodenschaft, Elektrodenhalter gebildet ist, und daß an diesem Element der zweite Kontaktbereich (26) und an der Pinole oder Pinolenelement (1) aus Aluminium oder Aluminiumlegierung der erste Kontaktbereich (22) vorgesehen ist.

## Claims

1. Spot welding electrode holder with at least two electrode (3), of which at least one first one is provided on a arm element (1, 2, 5) and, with this arm element, is movable relative to a second electrode (3), with at least one electric power lead (7, 8) which is manufactured of copper or a copper alloy and which, at a connection point (14), is electrically connected with the arm element made of electroconductive material, namely via a resistive connection between at least one first contact area formed on the arm element (1, 2, 5) and a second contact area (26) which lies adjacent to the first contact area and is formed on the power lead (7, 8), with the arm element (1, 2, 5) - at least in a partial area including the connection point (14) - being of aluminium or an aluminium alloy, with the first contact area (22) being formed of at least two layers or coatings (23 - 25), of which a first layer (23) of nickel or a nickel alloy is applied to the surface of the arm element, and of which at least a second layer (25), which forms the outer surface of the first contact area (22), is of silver or an alloy substantially consisting of silver, and with the power lead (7, 8) forming a contact block (9) on the connection point (14), this block having the second contact area on one surface,
characterised in that
the second contact area (26) comprises two layers (27, 28), of which a first layer (27), applied directly to the surface of the power lead (7, 8), is of gold or an alloy substantially consisting of gold, and a second layer (28) applied over this comprises silver or an alloy substantially consisting of silver.

2. Spot welding electrode holder in accordance with claim 1, characterised by means (15, 16) for cooling the arm element (1, 2, 5) at the connection point (14).

3. Spot welding electrode holder in accordance with claim 3 [sic], characterised in that the means for cooling are formed by at least one channel (15, 16) through which a coolant can flow, and that the channel or at least one coolant connection (17, 18) are also provided in the connection point (14) or on the contact areas (22, 26) in order to cool them.

4. Spot welding electrode holder in accordance with one of the preceding claims, characterised in that the at least one first contact area (22) is formed of at least three layers or coatings (23 - 25), of which the first is the layer (23) of nickel or of the nickel alloy, and of which a second layer (24) applied on the first layer is of gold or an alloy substantially consisting of gold, and a third layer (25), forming the outer surface of the first contact area (22), is of silver or of an alloy substantially consisting of silver.

5. Spot welding electrode holder in accordance with one of the preceding claims, characterised in that the aluminium alloy of the at least one arm element is an aluminium / copper / magnesium alloy, preferably AlCuMg 1F39.

6. Spot welding electrode holder in accordance with one of the preceding claims, characterised in that the power supply lead, at least in the connection area, is formed of a copper / chromium / zirconium alloy (CuCrZr).

7. Spot welding electrode holder in accordance with one of the preceding claims, characterised in that for the at least one arm element (1, 2, 5), at least two power supply leads (7, 8) are provided, which rest with their second contact areas (26) adjacent to opposite sides of the arm element (1, 2, 5), pressed against the first contact areas (22) there.

8. Spot welding electrode holder in accordance with one of the preceding claims, characterised in that the contact block (9) for the power supply (7, 8) forms at least one coolant connection (17, 18).

9. Spot welding electrode holder in accordance with one of the preceding claims, characterised in that the contact block (9) is at least partially accommodated by a recess (21) formed on the arm element (1, 2, 5).

10. Spot welding electrode holder in accordance with one of the preceding claims, characterised in that the layers of the first and/or second contact area are produced by means of the tampon-galvanisation method.

11. Spot welding electrode holder in accordance with one of the preceding claims, characterised in that the arm element is an arm (1, 2) and/or an arm holder (5).

12. Spot welding electrode holder in accordance with one of the preceding claims, characterised in that the at least one power supply lead is formed of an element (29) comprising copper or a copper alloy, for example of an electrode, an electrode shaft, electrode holder, and that the second contact area (26) is provided on this element, and the first contact area (22) is provided on the arm or arm element (1) of aluminium or aluminium alloy.

## Revendications

1. Pince à souder par points avec au moins deux électrodes (3), une de ces électrodes au moins étant prévue contre un bras (1, 2, 5) et déplaçable par rapport à la seconde électrode (3), avec au moins une alimentation électrique (7, 8) composée de cuivre ou d'un alliage cuivré et reliée électriquement au bras constitué d'un matériau conducteur, en un premier point de raccordement (14) et plus précisément par l'intermédiaire d'une connexion ohmique entre au moins une première zone de contact située sur le bras (1, 2, 5) et une seconde zone apposée à la première et située sur l'alimentation électrique (7, 8), le bras (1, 2, 5) consistant au moins en une zone partielle composée d'aluminium et d'un alliage d'aluminium et entourant le point de raccordement (14), la première zone de contact (22) consistant en au moins deux couches (23 - 25) à partir desquelles une première couche (23) en nickel et alliage nickelé est apposée sur la surface du bras et à partir desquelles une deuxième couche (25) constituée d'argent ou d'un alliage composé principalement d'argent et formant la surface extérieure de la première zone de contact (22) est conçue, l'alimentation électrique (7, 8) formant, au point de raccordement (14), un gros bloc de contact (9) avec, sur une surface, la deuxième zone de contact,
caractérisé en ce que la deuxième zone de contact (26) se compose de deux couches (27, 28), une première couche en or ou dans un alliage essentiellement doré, disposée directement sur la surface de l'alimentation électrique (7, 8) et une seconde couche en argent ou dans un alliage essentiellement argenté, disposée juste au dessus de la première.

2. Pince à souder par points selon la revendication 1, et caractérisée par l'utilisation de moyens de refroidissement du bras (1, 2, 5) au point de raccordement (14).

3. Pince à souder selon la revendication 2, caractérisée en ce que les moyens de refroidissement sont constitués d'au moins un canal (15, 16) parcouru par un agent réfrigérant et en ce que le canal ou au moins un raccordement de l'agent réfrigérant (17, 18) est prévu au point de raccordement (14) ou aux zones de contact (22, 26), en vue de leur refroidissement.

4. Pince à souder par points selon une des revendications précédentes, caractérisée en ce que au moins une première zone de contact (22) est formée d'au moins trois couches (23 - 25), la première de ces couches étant composée de nickel ou d'un alliage nickelé, la seconde (24) étant disposée sur la première et composée d'or ou d'un alliage essentiellement doré et la troisième (25) correspondant à la surface extérieure de la première et étant constituée d'argent ou d'un alliage essentiellement argenté.

5. Pince à souder par points selon une des revendications précédentes, caractérisée en ce que l'alliage d'aluminium d'au moins un bras consiste en un alliage cuivre - magnésium, et si possible AlCuMg 1F39.

6. Pince à souder par points selon une des revendications précédentes, caractérisée en ce que l'alimentation électrique est formée, au moins dans la zone de raccordement, d'un alliage cuivre-chrome - zirconium (CuCrZr).

7. Pince à souder par points selon une des revendications précédentes, caractérisée en ce que pour au moins un bras au moins deux alimentations électriques (7, 8) sont prévues, qui sont serrées contre les premières zones de contact (22) par les secondes zones de contact (26) opposées aux côtés du bras.

8. Pince à souder par points selon une des revendications précédentes, caractérisée en ce que le bloc de contact (9) pour l'alimentation électrique (7, 8) forme au moins une connexion pour l'agent de refroidissement (17, 18).

9. Pince à souder par points selon une des revendications précédentes, caractérisée en ce que le bloc de contact (9) est reçu au moins partiellement par un évidemment (21) formé sur le bras (1, 2, 5).

10. Pince à souder par points selon une des revendications précédentes, caractérisée en ce que les couches de la première et / ou de la deuxième zone de contact sont produites par un processus de galvanisation au tampon.

11. Pince à souder par points selon une des revendications précédentes, caractérisée en ce que le bras est une douille (1, 2) et / ou un porte-douilles (5).

12. Pince à souder selon une des revendications précédentes, caractérisée en ce que au moins une alimentation électrique est composée d'un élément (29), par exemple une électrode, une tige à électrodes ou un porte-électrodes, en ce que la seconde zone de contact est prévue contre cet élément, la première zone étant prévue, elle, contre la douille ou le bras (1) composé d'aluminium ou d'un alliage d'aluminium.
